# EUROPÄISCHE PATENTANMELDUNG

(11) **EP 3 552 574 A1**
(43) Veröffentlichungstag der Anmeldung: **16.10.2019**
(21) Anmeldenummer: 18166898.9
(22) Anmeldetag: 11.04.2018
(51) Int. Cl.: A61C 8/00, A61C 13/00

(54) **ZAHNIMPLANTAT-ANALOG**

(71) Anmelder: Dental Direkt GmbH, 32139 Spenge (DE)
(72) Erfinder: DREGER, Horst, 32139 Spenge (DE)
(74) Vertreter: Knoop, Philipp

(57) **Zusammenfassung**

Um ein Zahnimplantat-Analog (1), mit einem distal angeordneten, länglichen, zylindrischen Körper (28), dessen distales Ende (36) eine Verbindungsschnittstelle (37) zu einem Abutment aufweist, und einem Befestigungsabschnitt (32) an einem proximalen Ende zum Befestigen an einem Befestigungselement (3), anzugeben, welches bequemer und schneller in ein Dentalmodell (2) mit der gewünschten Orientierung eingesetzt werden kann, wird vorgeschlagen, dass der Körper (28) eine rotationssymmetrische Außenform aufweist.

## Beschreibung

Die vorliegende Erfindung betrifft ein Zahnimplantat-Analog, mit einem distal angeordneten, länglichen, zylindrischen Körper, dessen distales Ende eine Verbindungschnittstelle zu einem Abutment aufweist, und einem Befestigungsabschnitt an einem proximalen Ende zum Befestigen an einem Befestigungselement.

Ferner betrifft die vorliegende Erfindung ein Befestigungselement mit Befestigungsmitteln zum Befestigen eines Zahnimplantat-Analogs in einem Dentalmodell.

Weiter betrifft die vorliegende Erfindung einen Satz umfassend ein Zahnimplantat-Analog und ein Befestigungselement zum Befestigen des Zahnimplantat-Analogs in einem Dentalmodell.

Schließlich betrifft die vorliegende Erfindung ein Verfahren zum Erstellen eines digitalen Dentalmodells, bei dem ein Scanadapter in ein Implantat eingesetzt wird, anschließend mittels eines Intraoralscanners ein dreidimensionaler digitaler Abdruck erhalten wird, wobei eine Position eines Implantats anhand der Position des Scanadapters eingetragen wird.

Zahnimplantat-Analoge der eingangs genannten Art sind allgemein bekannt. Sie dienen insbesondere dazu, ein Abutment, auch Aufbau genannt, sowie einen Zahnersatz in einem Dentalmodell aufzunehmen. Dabei dient das Zahnimplantat-Analog dazu, das im Kieferknochen eines Patienten eingebrachte Zahnimplantat im Dentalmodell zu simulieren. Anhand eines Dentalmodells mit einem darin eingesetzten Zahnimplantat-Analog kann ein Abutment in das Analog eingebracht werden, damit es in dem Modell optisch abgetastet bzw. bearbeitet werden kann. Insbesondere die auch bei überwiegend oder vollständig digitaler Herstellung von Zahnersatz nötige Artikulierung, d.h. Anpassung der Höhe zu gegenüberliegenden oder benachbarten Zähnen im Mundraum, kann nur in einem Dentalmodell vorgenommen werden, um günstigstenfalls jegliche nachträgliche Anpassungsarbeiten des fertiggestellten Zahnersatzes erst nach dem ersten Einsetzen im Patienten entbehrlich zu machen.

Ein Zahnimplantat-Analog der eingangs genannten Art gleichermaßen wie ein Befestigungselement der eingangs genannten Art sowie ein gattungsgemäßer Satz sind beispielsweise aus der DE 10 2013 104352 A1 vorbekannt. Gemäß diesem Stand der Technik weist ein Analog einen länglichen, zylindrischen Körper auf, dessen distales Ende eine Verbindungschnittstelle zu einem Abutment und dessen proximales Ende ein Außengewinde aufweist. Ferner ist bei dem bekannten Zahnimplantat-Analog ein Indexierelement an der Außenseite des Körpers angebracht, und zwar in Form von mehreren in Umfangsrichtung unsymmetrisch verteilt angeordneten Nocken, die gegenüber der Außenfläche eines Längsabschnitts des vorbekannten Zahnimplantat-Analogs hervorstehen. Im Stand der Technik sollen die Nocken einerseits eine Verdrehsicherung und andererseits eine exakte und eindeutige Positionierung hinsichtlich der Drehrichtung in einem Dentalmodell gewährleisten. Im Stand der Technik wird das bekannte Zahnimplantat-Analog in das Dentalmodell von oben in eine darin ausgeformte Bohrung eingesteckt. Dabei muss die Drehposition so gewählt sein, dass die Nocken in entsprechende Nuten innerhalb der Bohrung im Dentalmodell eingreifen. Nach dem Eingreifen der Nocken in die Nuten ist zwar eine Bewegung in Längsrichtung, nicht jedoch eine Drehung des Zahnimplantat-Analogs möglich. Eine Fixierung in Längsrichtung wird mittels Anschlagflächen bewirkt, wobei anschließend ein Befestigungselement von unten, d. h. von unterhalb des Dentalmodells, in das Zahnimplantat-Analog eingedreht wird.

Wenngleich das vorbekannte Zahnimplantat-Analog und zugehörige Befestigungselement im Zusammenwirken als Satz grundsätzlich in der Praxis bewährt sind, ist das Einsetzen des Zahnimplantat-Analogs in das Dentalmodell mit Fixierung sowohl in axialer, radialer als auch der Drehrichtung relativ aufwändig in der Handhabbarkeit.

Der vorliegenden Erfindung liegt daher die Aufgabe zugrunde, eine exakte Ausrichtung und Befestigung des Zahnimplantat-Analogs im Dentalmodell noch schneller und einfacher zu erreichen als im Stand der Technik. In diesem Zusammenhang besteht darüber hinaus die Aufgabe, die Erstellung von Dentalmodellen angepasst an erfindungsgemäße Zahnimplantat-Analoge zu ermöglichen.

Hinsichtlich des Zahnimplantat-Analogs wird die zugrundeliegende Aufgabe bei einem Zahnimplantat-Analog der eingangs genannten Art erfindungsgemäß dadurch gelöst, dass der längliche, zylindrische Körper eine rotationssymmetrische Außenform aufweist. Im Gegensatz zu dem Stand der Technik, bei dem eine Indexierung anhand von mehreren in Umfangsrichtung unsymmetrisch verteilt angeordneten Nocken, die gegenüber der Außenfläche des Längseinschnitts hervorstehen, bewirkt wird, ist erfindungsgemäß das Zahnimplantat-Analog mit einem distalen, länglichen, zylindrischen Körper versehen, welcher eine rotationssymmetrische Außenform aufweist. Beim Einsetzen des Zahnimplantat-Analogs gemäß der Erfindung von der Oberseite eines Dentalmodells aus muss daher mit Vorteil nicht auf eine bestimmte Winkelorientierung des Zahnimplantat-Analogs geachtet werden. Vielmehr genügt es, das Zahnimplantat-Analog in eine dafür vorgesehene Bohrung innerhalb des Dentalmodells in beliebiger Winkelausrichtung einzuführen. Die Handhabung des erfindungsgemäßen Zahnimplantat-Analogs beim Einsetzen in ein Dentalmodell von oben ist daher gegenüber dem Stand der Technik verbessert. Dadurch ergibt sich mit Vorteil eine kürzere Bearbeitungszeit beim Bestücken des Dentalmodells mit dem Zahnimplantat-Analog und einem Abutment.

Insbesondere ist es in Ausgestaltung der Erfindung von Vorteil, wenn bei dem Zahnimplantat-Analog nach der Erfindung der Befestigungsabschnitt einen kleineren Außendurchmesser als ein proximaler Längsabschnitt des Körpers aufweist. Auf diese Weise kann mit Vorteil der Befestigungsabschnitt zum Zwecke der Indexierung, d. h. Fixierung hinsichtlich einer Winkelausrichtung, nicht rotationssymmetrisch ausgestaltet sein, ohne dabei eine Rotierbarkeit des Zahnimplantat-Analogs innerhalb einer im Dentalmodell zur Aufnahme dessen vorgesehenen Bohrung aufgrund der rotationssymmetrischen Außenform des zylindrischen länglichen Körpers zu verhindern.

In bevorzugter Ausgestaltung des erfindungsgemäßen Zahnimplantat-Analogs weist der Befestigungsabschnitt mindestens eine radiale Vorstehung, insbesondere Stift, zum Zusammenwirken, insbesondere über einen Schlitz und/oder eine Nut, mit dem Befestigungselement auf. Auf diese Weise kann erfindungsgemäß das Zahnimplantat-Analog mit dem Befestigungselement verriegelt werden, um eine Fixierung in sowohl axialer Richtung als auch in Rotationsrichtung zu erreichen, bei geeignet ausgeformtem Befestigungselement.

Insbesondere kann eine Befestigung des Zahnimplantat-Analogs nach der Erfindung zwischen dem Befestigungsabschnitt und dem Befestigungselement nach Art eines Bajonettverschlusses vorgesehen sein. Dabei greifen zwei radial über den Befestigungsabschnitt des Zahnimplantat-Analogs in einem Winkelabstand voneinander angeordnete, insbesondere gegenüberliegende, Stifte in eine Nut auf Seiten des Befestigungselements ein. In diesem Falle kann die Nut in dem Befestigungselement nach Art eines Bajonettverschlusses ausgestaltet sein, mit einem axial verlaufenden Abschnitt und einem sich an den axial verlaufenden Abschnitt anschließenden Umfangsabschnitt.

Wenn in weiterer vorteilhafter Ausgestaltung des erfindungsgemäßen Zahnimplantat-Analogs der Körper einen distalen Längsabschnitt mit einem größeren Durchmesser aufweist als jener des proximalen Längsabschnitts, ist eine einfache Montage des Zahnimplantat-Analogs im Dentalmodell möglich. Beispielsweise kann der distale Längsabschnitt mit größerem Durchmesser an einer Stufe an den proximalen Längsabschnitt mit kleinerem Durchmesser angrenzen.

Um in dem Zahnimplantat-Analog nach Einsetzen in ein Dentalmodell ein Abutment einbauen zu können, ist in Ausgestaltung des erfindungsgemäßen Zahnimplantat-Analogs die Verbindungschnittstelle ausgelegt, um mit einer Dentalimplantat-Schraube eines Abutments zusammenzuwirken.

Die auf ein Befestigungselement gerichtete Aufgabe, die der vorliegenden Anmeldung zu Grunde liegt, wird mittels eines Befestigungselements der eingangs genannten Art dadurch gelöst, dass es Indexiermittel zur Herstellung eines Rotationsschutzes gegenüber dem Dentalmodell aufweist. Das erfindungsgemäße Befestigungselement weist Mittel zum Zusammenwirken mit einem Befestigungsabschnitt an einem proximalen Ende eines Zahnimplantat-Analogs auf. Wenn es erfindungsgemäß Indexiermittel aufweist, welche einen Rotationsschutz gegenüber dem Dentalmodell aufweisen, ist beim Befestigen eines Zahnimplantat-Analogs in einem Dentalmodell mithilfe des Befestigungselements ein Rotationsschutz gegenüber dem Dentalmodell durch das Befestigungselement gewährleistet. Demgegenüber kann das Zahnimplantat-Analog im Grundkörper rotationssymmetrisch ausgeformt sein, um dessen Einsetzen von oben in das Dentalmodell zu erleichtern.

In bevorzugter Ausgestaltung des erfindungsgemäßen Befestigungselements sind die Indexiermittel als Indexierungslängsabschnitt mit einer nicht rotationssymmetrischen Querschnittsfläche ausgestaltet.

Insbesondere kann in günstiger Ausgestaltung des Befestigungselements nach der Erfindung die Querschnittsfläche des Indexierungslängsabschnitts im Wesentlichen kreisförmig ausgestaltet sein, wobei mindestens ein Bereich außerhalb mindestens einer Sekante ausgespart ist. Ausgehend von einer zylindrischen Grundform können somit erfindungsgemäß abgeflachte Seiten vorgesehen sein, um einen Rotationsschutz zu gewährleisten.

Besonders bevorzugt ist es in Weiterbildung des erfindungsgemäßen Befestigungselements, wenn mehrere Bereiche außerhalb jeweils einer Sekante ausgespart sind, wobei mindestens zwei Sekanten nicht parallel zueinander verlaufen.

Um eine sichere Positionierung des Zahnimplantat-Analogs zum Nullpunkt des patientenseitigen Implantates auf besonders einfache Weise zu erreichen, weist das erfindungsgemäße Befestigungselement in Ausgestaltung der Erfindung an einem distalen Ende eine, insbesondere ringförmige, Anschlagfläche zum Anlegen an eine komplementäre Anlegefläche des Dentalmodells und/oder zum Anlegen des Zahnimplantat-Analogs auf.

Wenn in weiterer bevorzugter Ausgestaltung des erfindungsgemäßen Befestigungselements die Befestigungsmittel als im Wesentlichen hohlzylindrischer Befestigungslängsabschnitt ausgestaltet sind, in welchen ein Befestigungsabschnitt des Zahnimplantat-Analogs einführbar ist, kann eine wechselseitige Verriegelung des Zahnimplantat-Analogs mit dem Befestigungselement, um das Zahnimplantat-Analog im Dentalmodell zu fixieren, durch Einführen des Befestigungsabschnitts des Zahnimplantat-Analogs in die Befestigungsmittel des Befestigungselements erfolgen.

In diesem Zusammenhang weisen die Befestigungsmittel Eingriffsmittel, insbesondere einen Schlitz und/oder eine Nut, zum Zusammenwirken mit einer radialen Vorstehung, insbesondere Stift, eines Befestigungsabschnitts eines Zahnimplantat-Analogs auf. Auf diese Weise kann mit Vorteil eine Verriegelung des Zahnimplantat-Analogs in dem Befestigungselement nach Art eines Bajonettverschlusses erfolgen. Insbesondere verläuft eine Nut zur Führung des Stifts seitens des Zahnimplantat-Analogs in einem Abschnitt in axialer Richtung, an welchen sich ein in Umfangsrichtung querlaufender Abschnitt anschließt.

Der in Umfangsrichtung verlaufende Abschnitt der Nut verläuft vorzugsweise senkrecht zur Axialrichtung und umschließt einen Winkelbereich von weniger als 40°.

Besonders bevorzugt ist es in diesem Zusammenhang, wenn zwei, vorzugsweise radial gegenüberliegend angeordnete, analog geformte Nuten vorgesehen sind. In diesem Fall kann eine Befestigung des Zahnimplantat-Analogs mit den Befestigungselementen, um es in einem Dentalmodell anzubringen, nach Art eines Bajonettverschlusses erfolgen, wenn in einem Befestigungsabschnitt des Zahnimplantat-Analogs zwei entsprechend zueinander angeordnete, insbesondere radial gegenüberliegende, Vorstehungen, beispielsweise Stifte, vorgesehen sind.

In einer vorteilhaften Weiterbildung des erfindungsgemäßen Befestigungselements ist vorgesehen, dass es Fixiermittel, insbesondere Fixierausnehmungen, zur Herstellung einer Fixierung in axialer Richtung gegenüber dem Dentalmodell aufweist. Auf diese Weise ist das Befestigungsmittel in dem Dentalmodell bezüglich der Höhe im Dentalmodell fixierbar. Dies ist von Vorteil, da das Befestigungsmittel hierdurch nach der Montage im Dentalmodell in einer definierten Höhe bezüglich des Dentalmodells verbleibt. Eine Fixierung in axialer Richtung gegenüber dem Dentalmodell ist beispielsweise durch elastische Laschen und/oder Rasten des Dentalmodells möglich, die in die Fixiermittel des Befestigungselements, insbesondere die Fixierausnehmungen in dem Befestigungselement, eingreifen und auf diese Weise mit Vorteil eine definierte Höhe einstellen beziehungsweise vorgeben.

Die der Erfindung zugrundeliegende Aufgabe wird hinsichtlich eines Satzes durch einen Satz der eingangs genannten Art gelöst, bei welchem das Befestigungselement nach einem der Ansprüche 6 bis 13 ausgestaltet ist. Bei einem derartigen Satz ist das Einsetzen des Zahnimplantat-Analogs in das Dentalmodell einfach und schnell durchführbar, da das Zahnimplantat-Analog rotationssymmetrisch ausgestaltet sein kann und daher ohne Beachtung einer Winkelausrichtung in eine Bohrung in dem Dentalmodell eingeführt werden kann. Denn eine Indexierung im Sinne eines Rotationsschutzes ist bei dem erfindungsgemäßen Satz durch das Befestigungselement sichergestellt.

Die Handhabbarkeit des erfindungsgemäßen Satzes wird noch verbessert, wenn das Zahnimplantat-Analog nach einem der Ansprüche 1 bis 5 ausgestaltet ist.

Eine Verbesserung des Satzes gemäß der Erfindung ist dadurch gekennzeichnet, dass er ein Vorspannelement umfasst, um auf das Zahnimplantat-Analog und auf das Befestigungselement in axialer Richtung eine diese auseinander treibende Kraft auszuüben, wenn das Zahnimplantat-Analog mittels des Befestigungselements in einem Dentalmodell befestigt ist. Insbesondere, wenn eine Befestigung des Zahnimplantat-Analogs in dem Befestigungselement nach Art eines Bajonettverschlusses realisiert ist, wird mit dem erfindungsgemäßen Vorspannelement eine sichere Fixierung sowohl in axialer als auch in Winkelrichtung verbessert.

Vorzugsweise ist das Vorspannelement elastisch ausgestaltet, vorzugsweise als Kugel. Insbesondere kann eine Kugel aus einem elastischen Material verwendet werden, wenn das Befestigungselement einen hohlzylindrischen Befestigungslängsabschnitt aufweist, in welchen ein Befestigungsabschnitt des Zahnimplantat-Analogs einführbar ist. Der Durchmesser der Kugel kann erfindungsgemäß so gewählt sein, dass er in den hohlzylindrischen Innenraum des Befestigungslängsabschnitts des Befestigungselements derart eingeführt wird, dass beim Einführen des Befestigungsabschnitts des Zahnimplantat-Analogs eine elastische Komprimierung der Kugel erfolgt, welche beim Eindrehen des Zahnimplantat-Analogs in die bajonettverschlussartige Führungsnut eine Fixierung in axialer Richtung und dadurch auch in Winkelrichtung hervorruft.

Schließlich wird die auf ein Verfahren zum Erstellen eines digitalen Dentalmodells der eingangs genannten Art gerichtete Aufgabe dadurch gelöst, dass ein digitales Modell eines Befestigungselements zum Befestigen eines Zahnimplantat-Analogs in den digitalen Abdruck eingetragen wird, wobei das Befestigungselement nach einem der Ansprüche 6 bis 13 ausgestaltet ist. Mit Vorteil lassen sich mit dem erfindungsgemäßen Verfahren Dentalmodelle erzeugen, bei denen durch das Zusammenwirken des Dentalmodells mit dem Befestigungselement nach der Erfindung eine Positionierung des Implantats beim Einführen des Zahnimplantat-Analogs von oben sowohl in axialer Richtung als auch in Drehrichtung mühelos erreicht werden kann, ohne dass das Implantat selber über Indexierungsmittel verfügen muss.

Die Erfindung wird in einer bevorzugten Ausführungsform unter Bezugnahme auf eine Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen.

Die Figuren der Zeichnung zeigen im Einzelnen:
- Fig. 1:: perspektivische schematische Darstellung der Montagesituation kurz vor dem Einsetzen eines erfindungsgemäßen ZahnimplantatAnalogs in ein Dentalmodell von oben und dessen Befestigung anhand eines erfindungsgemäßen Befestigungsmittels, welches von unten in das Dentalmodell eingeführt wird;
- Fig. 2:: Axialschnitt durch das Modell gemäß Fig. 1 entlang der Linie II-II in Fig. 1, wobei das erfindungsgemäße Zahnimplantat-Analog mithilfe des erfindungsgemäßen Befestigungselements in dem Zahnmodell montiert ist;
- Fig. 3:: perspektivische Darstellung des Befestigungselements, welches in den Figuren 1 und 2 im Zusammenwirken mit dem Zahnimplantat-Analog und dem Dentalmodell gezeigt ist;
- Fig. 4:: Radialschnitt in axialer Höhe der Linie IV-IV gemäß Fig. 3 durch das in Fig. 3 gezeigte erfindungsgemäße Befestigungselement;
- Fig. 5:: Seitenansicht in radialer Blickrichtung entlang des Pfeils V in Fig. 3 auf das erfindungsmäße Befestigungselement gemäß Fig. 3 nebst einer Darstellung des Kurvenverlaufs einer Nut;
- Fig. 6:: Seitenansicht in radialer Blickrichtung entlang des Pfeils VI in Fig. 1 auf ein erfindungsgemäßes Zahnimplantat-Analog;
- Fig. 7:: perspektivische Ansicht zweier Montagehilfe zum Einsetzen von erfindungsgemäßen Zahnimplantat-Analogen und Befestigungselementen in ein Dentalmodell.

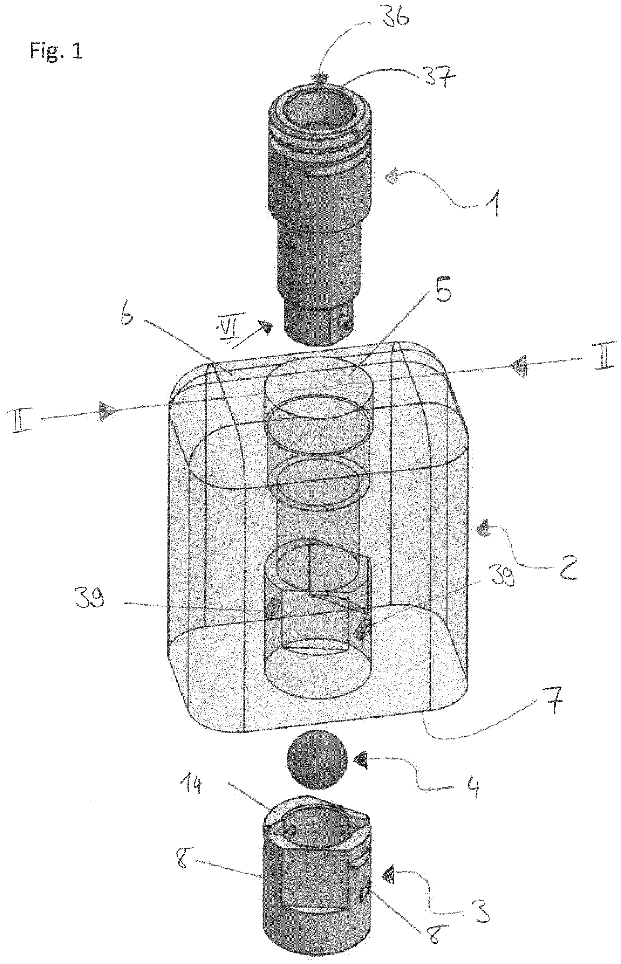

Die Fig. 1 zeigt in einer Prinzipdarstellung in perspektivischer Ansicht ein Ausführungsbeispiel eines erfindungsgemäßen Zahnimplantat-Analogs 1 oberhalb eines digital hergestellten Dentalmodells 2 in einem Zustand unmittelbar vor dem Einsetzen des Zahnimplantat-Analogs 1 in das Dentalmodell 2. Die Darstellung gemäß Figur 1 ist dabei nach Art einer Explosionszeichnung zu verstehen.

Weiter ist in Fig. 1 unterhalb des Dentalmodells 2 ein ebenfalls in einer für die Montage des Zahnimplantat-Analogs 1 in das Dentalmodell 2 bereiten Stellung gezeigtes Befestigungselement 3 zu erkennen. Das Befestigungselement 3 ist durch die Laschen bzw. Rasten 39 des Dentalmodells, die beim Einsetzen des Befestigungselements 3 in die Fixierausnehmungen 8 des Befestigungselements eingreifen, axial fixiert. Weiter ist zwischen dem Befestigungselement 3 und dem Dentalmodell 2 eine elastische Kunststoffkugel 4 gezeigt, wiederum in einem Zustand mittelbar vor Montage des erfindungsgemäßen Zahnimplantat-Analogs 1 in dem Dentalmodell 2.

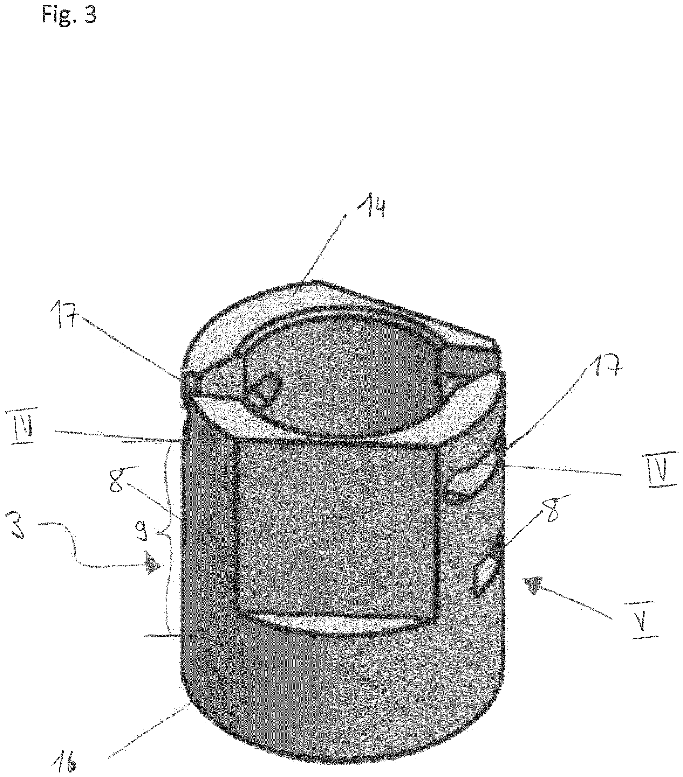

Der Aufbau des Zahnimplantat-Analogs 1 und des Befestigungselements 3 wird weiter unten mit Bezugnahme auf die Figuren 3 bis 6 noch näher erläutert werden. In der Fig. 1 ist zu erkennen, dass das Dentalmodell 2 eine Bohrung 5 zur Aufnahme des Zahnimplantat-Analogs 1 aufweist. Die Bohrung 5 durchdringt das Dentalmodell 2 von der Oberseite 6 des Dentalmodells 2 bis zur Unterseite 7 des Dentalmodells 2. An der Unterseite 7 des Dentalmodells 2 ist die Bohrung 5 zur Aufnahme des Befestigungselements 3 geformt.

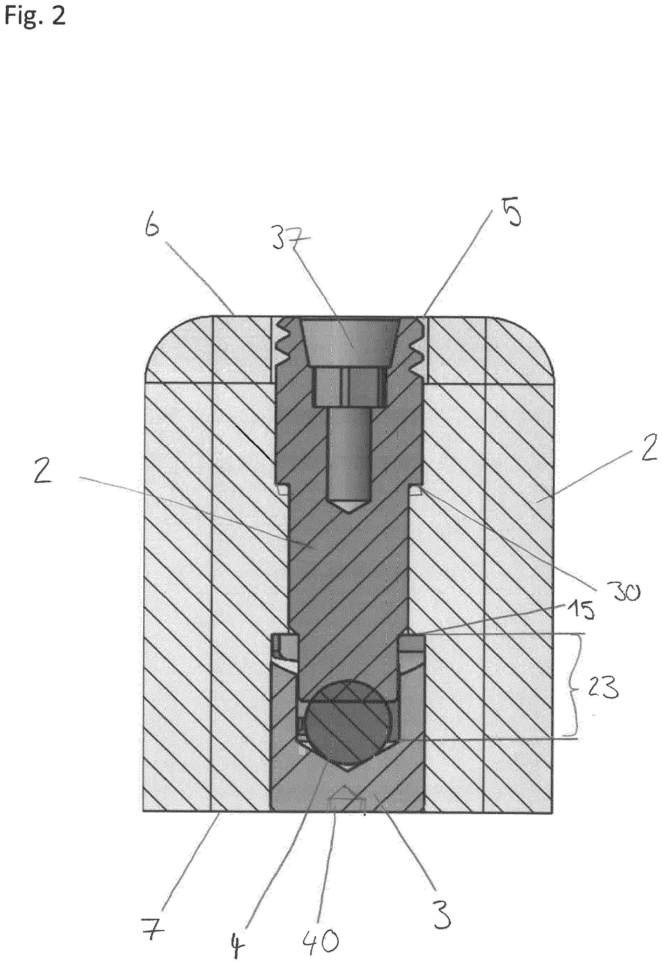

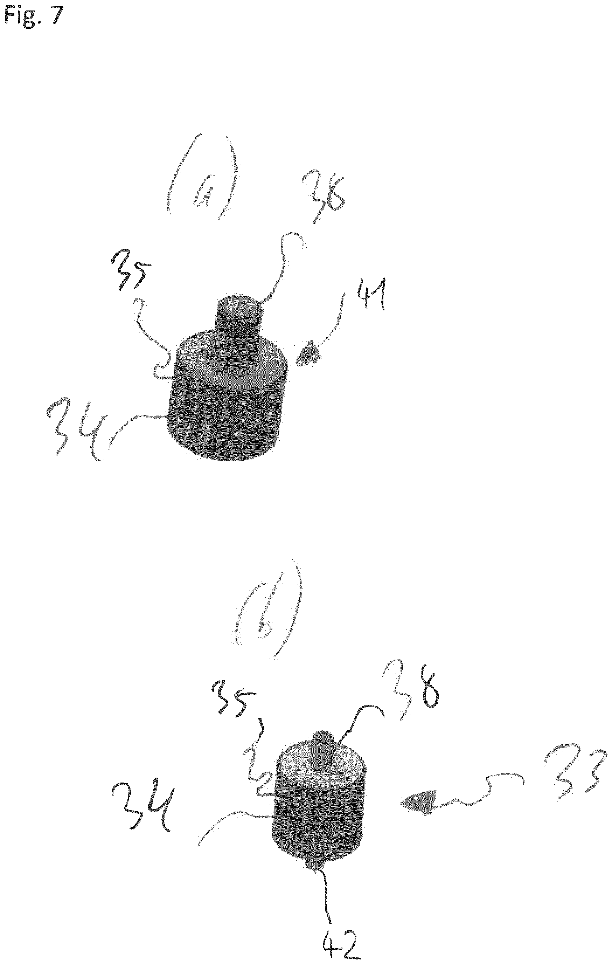

Die Fig. 2 zeigt in einem Axialschnitt durch die Linie II - II aus Fig. 1 einen Zustand, in welchem das Zahnimplantat-Analog 1 durch die Oberseite 6 des Dentalmodells 2 in das Dentalmodell 2 eingesetzt ist und mittels des von der Unterseite 7 des Dentalmodells 2 in die Bohrung 5 eingefügten Befestigungselements 3, welches mit den in die Fixierausnehmungen 8 eingreifenden Rasten 39 aus Fig. 1 des Dentalmodells 2 axial fixiert ist, montiert ist. Dabei dient die elastische Kunststoffkugel 4 zum Erzeugen einer elastischen Rückstellkraft in axialer Richtung, welche das Zahnimplantat-Analog 1 in axialer Richtung von dem Befestigungselement 3, und damit auch vom Dentalmodell 2, wegdrückt. Der in Fig. 2 gezeigte Montagezustand zeigt ferner die Verbindungsschnittelle 37 für ein Abutment, welches in das Zahnimplantat-Analog 1 eingeschraubt werden kann, sowie das Befestigungsgewinde 40 des Befestigungselements zur Befestigung einer Montagehilfe 41 aus Fig. 7.

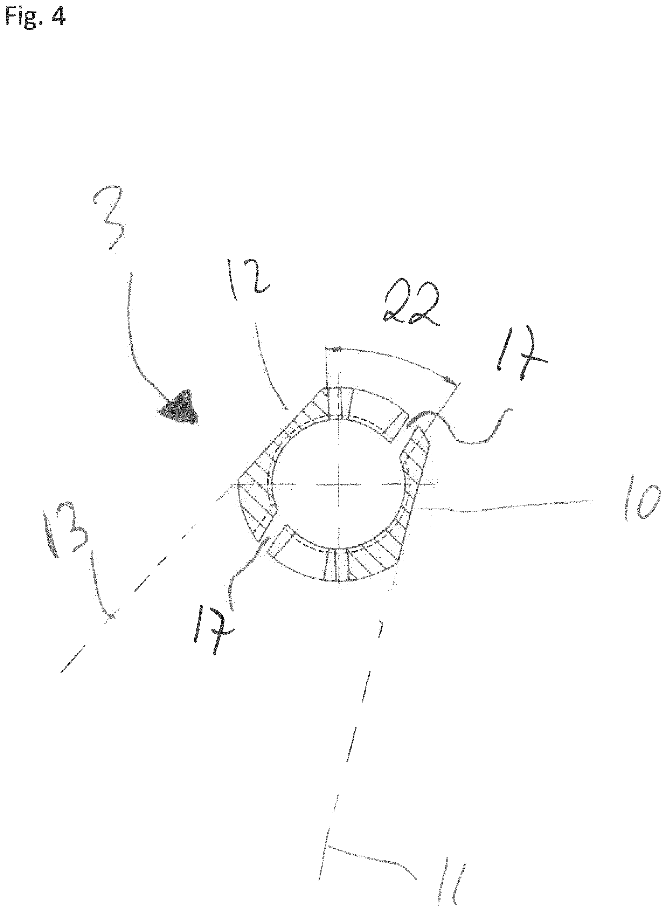

Mit Bezugnahme auf die Fig. 3 wird nachstehend der Aufbau des Befestigungselements 3 näher erläutert. Die perspektivische Ansicht auf das Befestigungselement 3 lässt erkennen, dass das Befestigungselement 3 als im Wesentlichen hohlzylindrische Hülse ausgestaltet ist. Das Befestigungselement 3 weist einen Indexierungslängsabschnitt 9 auf, welcher eine nicht rotationssymmetrische Querschnittsfläche aufweist. Die Fig. 4 zeigt in diesem Zusammenhang einen Axialschnitt auf Höhe der Linie IV-IV gemäß Fig. 3. Wie in der Fig. 4 zu erkennen, ist die Querschnittsfläche des Befestigungselements 3 in dem Indexierungslängsabschnitt 9 zunächst mit einer Kreisform als Grundform ausgestaltet. Jedoch ist ein erster Bereich 10 außerhalb einer ersten Sekante 11 ausgespart. Außerdem ist ein zweiter Aussparbereich 12 außerhalb einer zweiten Sekante 12 ausgespart. Die radiale Schnittansicht gemäß Fig. 4 zeigt dabei, dass die Sekanten 11, 13 in einem Winkel zueinander ausgerichtet sind, so dass sie nicht parallel zueinander verlaufen. Die Außenkontur des Befestigungselements 3 ist im Bereich des Indexierungslängsabschnitts 9 des Befestigungselements 3 für einen Formschluss mit der in der Nähe der Unterseite 7 des Dentalmodells 2 komplementär ausgeformten Bohrung 5 ausgestaltet, um eine Indexierung im Sinne eines Rotationsschutzes zu gewährleisten, wenn das Befestigungselement 3 von der Unterseite 7 in das Dentalmodell 2 eingeführt ist.

Der Indexierungslängsabschnitt 9 endet an der Oberseite mit einer eine ringförmige Grundfläche aufweisenden Anschlagsfläche 14. Die Form der Anschlagsfläche 14 entspricht dabei der Querschnittsform gemäß Fig. 4.

Wie in Fig. 2 besonders gut zu erkennen, entsteht die ringförmige Stufenfläche 15 in dem stufenförmigen Übergang der Bohrung 5 von einem kleineren auf einen größeren Durchmesser. Wie zuvor dargelegt, kann das Befestigungselement 3 mit den in die Fixerausnehmungen 8 eingreifenden Rasten 39 des Dentalmodells 2 in dem Dentalmodell 2 in der Höhe fixiert werden. Ferner ist durch das Zusammenwirken der Querschnittskontur des Befestigungselements 3 im Indexierungslängsabschnitts 9 mit der entsprechenden Ausformung der Bohrung 5 im Bereich der Unterseite 7 des Dentalmodells 2 eine Indexierung im Sinne eines Rotationsschutzes gewährleistet. Insgesamt ist das als hohlzylindrische Hülse ausgestaltete Befestigungselement 3 somit geeignet, in ein entsprechend geformtes Dentalmodell 2 in allen geometrischen Richtungen fixiert eingesetzt zu werden.

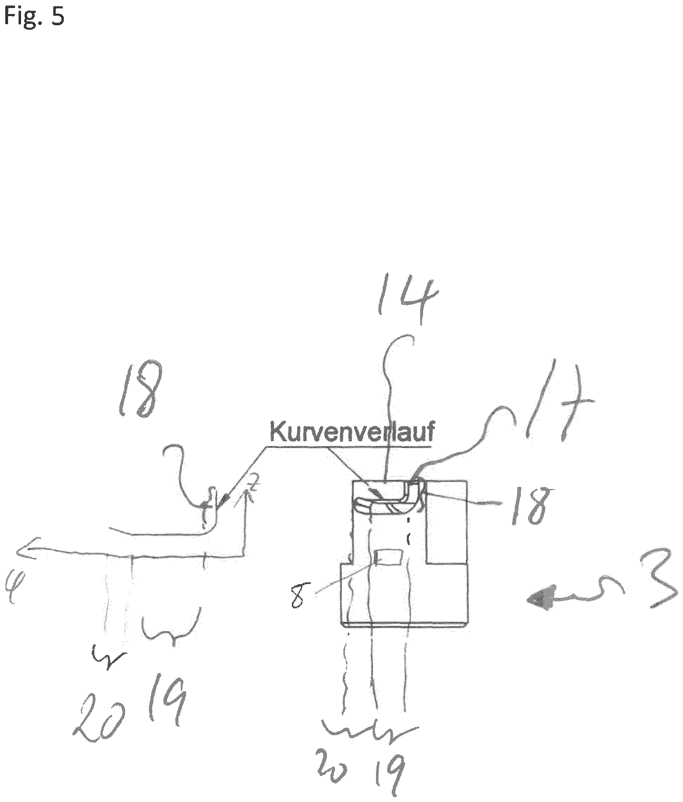

Wie insbesondere den Figuren 3, 4 und 5 zu entnehmen ist, weist das Befestigungselement 3 im Bereich des Indexierungslängsabschnitts 9 in der im Wesentlichen zylindrischen Mantelfläche 16 zwei radial gegenüberliegend zueinander gespiegelte Führungsnuten 17 auf. In diesem Zusammenhang zeigt die Fig. 5 als Seitenansicht in radialer Blickrichtung gemäß dem Pfeil V in Fig. 3 eine Ansicht, anhand derer der Verlauf der Führungsnuten 17 zu erkennen ist. Dabei ist die als Kurvenverlauf gekennzeichnete Kurve in einer z-ϕ Darstellung gezeigt, wobei z die axiale Richtung, welche in der Zeichenebene gemäß Fig. 5 verläuft, darstellt und ϕ im Sinne von Polarkoordinaten einen Azimutwinkel des hülsenförmigen Befestigungselements 3 kennzeichnet.

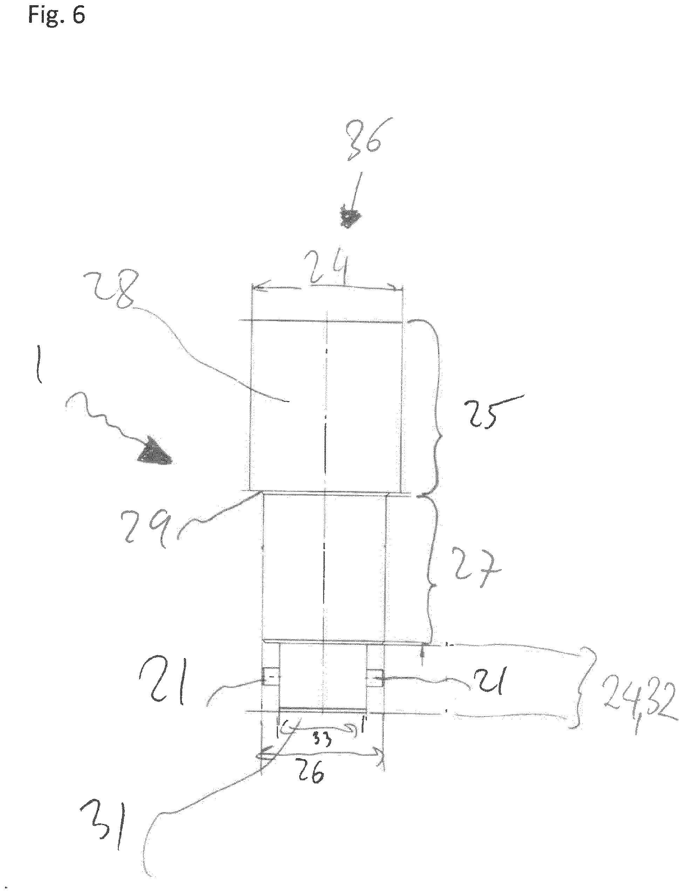

Demnach, vergleiche insbesondere die Figuren 3 und 5, verlaufen die Führungsnuten 17, welche die Anschlagfläche 14 des Befestigungselements 3 schlitzartig unterbrechen (vergleiche auch Fig. 4), zunächst in einem Axialabschnitt 18 in axialer Richtung. An den Axialabschnitt 18 schließt sich ein Umfangsabschnitt 19 an, in welchem die Führungsnut 17 in gleichbleibendem Axialabstand zu der in der axial darüber liegenden Anschlagfläche 14 entlang der Mantelfläche 16 des Befestigungselements 3 verläuft. Schließlich schließt sich in Umfangsrichtung d.h. bei steigendem Azimutwinkel ϕ, ein Verriegelungsabschnitt 20 an. Der Verriegelungsabschnitt 20 der Führungsnuten 17 ist gekennzeichnet durch eine lineare Verringerung des Abstands der Führungsnut 17 zu der Anschlagsfläche 14 am Ende des Indexierungslängsabschnitts 9 des Befestigungselements 3. Die Ausdehnung des Verriegelungsabschnitts 20 in Umfangsrichtung, d. h. in ϕ-Richtung, ist dabei angepasst an Stifte 21 als radiale Vorstehungen im Zahnimplantat-Analog 1, wie weiter unten im Zusammenhang mit der Fig. 6 näher erläutert ist.

Wie der Fig. 4 zu entnehmen ist, deckt die Führungsnut 17 in Umfangsrichtung, d. h. in ϕ-Richtung, einen Azimutwinkelbereich 22 von weniger als 40° ab.

Im Bereich des Indexierungslängsabschnitts 9 ist das als Hülse ausgestaltete Befestigungselement 3 hohlzylindrisch ausgeformt, wobei ein Befestigunglängsabschnitt 23 des Befestigungselements 3 so ausgestaltet ist, dass ein Befestigungsabschnitt 24 des Zahnimplantat-Analogs 1 in diesen eingeführt werden kann.

Die Fig. 6 zeigt in einer Seitenansicht in Blickrichtung des Pfeils VI gemäß Fig. 1 das Zahnimplantat-Analog 1. Der Fig. 6 ist die Außenkontur des Zahnimplantat-Analogs 1 zu entnehmen. Demnach ist ein Außendurchmesser 24 des Zahnimplantat-Analogs 1 in einem distalen Längsabschnitt 25 größer als der Außendurchmesser 26 eines proximalen Längsabschnitts 27 des durch den distalen Längsabschnitt 25 und den proximalen Längsabschnitt 27 insgesamt definierten, länglichen, zylindrischen Körpers 28. Durch den stufenförmigen Übergang 29 zwischen dem distalen Längsabschnitt 25 und dem proximalen Längsabschnitt 27 des zylindrischen Körpers 28 entsteht eine ringförmige Anschlagsfläche. Die ringförmige Anschlagsfläche, welche durch den stufenförmigen Übergang 29 des zylindrischen Körpers 28 definiert ist, kann als Anschlagsfläche zur axialen Fixierung des Zahnimplantat-Analogs 1 in einem Zahn-Dentalmodell 2 dienen, wenn die Bohrung 5 im Dentalmodell 2 eine komplementär geformte Stufe 30 aufweist, wie dies in Fig. 2 angedeutet ist.

An den zylindrischen Körper 28, welcher durch die Längsabschnitte 25, 27 gegeben ist, schließt sich an einem proximalen Ende 31 des Zahnimplantat-Analogs 1 ein Befestigungsabschnitt 32 an. Der Befestigungsabschnitt 32 des Zahnimplantat-Analogs 1 hat einen Außendurchmesser 33, welcher kleiner ausgestaltet ist als der Außendurchmesser 26 des proximalen Längsabschnitts 27 des Körpers 28 des Zahnimplantat-Analogs 1.

Wohingegen der Befestigungsabschnitt 32 eine zylindrische Grundform aufweist, ist er entlang zwei parallel zueinander verlaufender Sekanten abgeflacht. Im Abflachbereich weist der Befestigungsabschnitt 32 Stifte 21 auf, welche über die abgeflachte Mantelfläche des Befestigungsabschnitts 32 radial hinausragen. Die maximale radiale Ausdehnung des Befestigungsabschnitts 32 im Bereich der Stifte 21, welche radial gegenüberliegend angeordnet sind, entspricht dabei dem Außendurchmesser 26 des proximalen Längsabschnitts 27 des zylindrischen Körpers 28 des Zahnimplantat-Analogs 1.

Schließlich zeigt die Fig. 7 eine Montagehilfe 33 (a) für das Zahnimplantat-Analog 1 .sowie eine Montagehilfe 41 (b) für das Befestigungselement 3 jeweils in perspektivischer Ansicht. Anhand der in den Figuren 7(a) und (b) gezeigten Montagehilfen 33 und 41 kann das Einsetzen des Zahnimplantat-Analogs 1 von oben in das Dentalmodell 2 sowie das Einsetzen des Befestigungselements 3 von unten in das Dental-Modell 2 bequemer gestaltet werden. Die beiden Montagehilfen 33 und 41 weisen jeweils einen zylindrischen Grundkörper 34 auf, dessen Mantelfläche 35 eine in Axialrichtung verlaufende Riffelung aufweist, um das Eindrehen des Zahnimplantat-Analogs 1 bzw. des Befestigungselements 3 von Hand zu erleichtern.

Die Montagehilfe 33 für das Zahnimplantat-Analogs kann mit dem Montagegewinde 38 in der Verbindungsschnittstelle 37 des Zahnimplantat-Analogs verschraubt werden. Über einen sich an den zylindrischen Grundkörper 34 anschließenden, mit diesem konzentrischen Montageabschnitt 42 kann in nicht näher dargestellter Weise ein zusätzliches Montagewerkzeug verbunden werden.

Die Montagehilfe 41 für das Befestigungselement 3 kann mit dem Montagegewinde 38 mit dem im unteren Bereich des Befestigungselements 3 vorgesehenen Befestigungsgewinde 40 verschraubt werden, um eine Montage des Befestigungselements 3 in dem Dentalmodell 2 zu vereinfachen.

Um im Rahmen der Erfindung das erfindungsgemäße Zahnimplantat-Analog 1 mithilfe des erfindungsgemäßen Befestigungselements 3 in dem digitalen Dentalmodell 2 drehfest und mit definierter Axiallage zu befestigen, wird wie folgt vorgegangen.

Man geht von dem in Fig. 1 gezeigten Zustand aus. Zunächst wird die Montagehilfe 41 in das Befestigungsgewinde 40 des Befestigungselements 3 eingeschraubt. Danach wird das Befestigungselement 3 von der Unterseite 7 des Dentalmodells 2 mit der in dem Befestigungsgewinde 40 verschraubten Montagehilfe 41 in die Bohrung 5 im Dentalmodell 2 eingeführt und in eine derartige Winkelstellung gebracht, dass der Indexierungslängsabschnitt 9 passend zu der komplementär geformten Bohrung 5 des Dentalmodells 2 im Bereich der Unterseite 7 ausgerichtet ist, um einen Formschluss zu bilden, welcher einen Rotationsschutz des Befestigungselements 3 gegenüber dem Dentalmodell 2 sicherstellt. Das Befestigungselement wird nun axial in das Dentalmodell 2 nach oben geschoben, bis die Rasten 39 des Dentalmodells in die Fixierausnehmungen 8 des Befestigungselements 3 einrasten und damit die Höhe des Befestigungselements 3 in dem Dentalmodell 2 fixieren.

Nun wird die Montagehilfe 33 für das Zahnimplantat-Analog 1 mit dem Montagegewinde 38 in die Verbindungsschnittstelle 37 eingeschraubt. Das Zahnimplantat-Analog 1 kann nun mit der mit dem Montagegewinde 38 verschraubten Montagehilfe 33 in die Bohrung 5 im Dentalmodell 2 in axialer Richtung eingeführt werden. Das axiale Einführen wird begrenzt, sobald die Stifte 21 auf die Anschlagfläche 14 des Befestigungselements 3 treffen. Dabei befindet sich die Kunststoffkugel 4 im Innern des Befestigungslängsabschnitts 23 des Befestigungselements 3.

Nun wird das Zahnimplantat-Analog 1 um die Längsachse gedreht, um die Stifte 21 mit dem Axialabschnitt 18 der Führungsnuten 17 im Bereich der Anschlagsfläche 14 des Befestigungselements 3 in Ausrichtung zu bringen. In diesem Zustand lässt sich das Zahnimplantat-Analog 1 weiter axial in die Bohrung 5 im Dentalmodell 2 einführen. Dabei wird das Zahnimplantat-Analog 1 über die Stifte 21 in den beiden Führungsnuten 17 geführt. Sobald die Stifte 21 den Axialabschnitt 18 der Führungsnuten 17 durchlaufen haben, wird das Zahnimplantat-Analog 1 um den Azimutwinkelbereich 22 rotiert. Dabei bewegen sich die Stifte 21 entlang des Umfangsabschnitts 19 der Führungsnuten 17, bis sie den Verriegelungsabschnitt 20 erreichen.

Beim Durchlaufen des Axialabschnitts 18 der Führungsnuten 17 wird die elastische Kunststoffkugel 4 elastisch komprimiert, wie in Fig. 2 zu erkennen ist. Durch die elastische Rückstellkraft entsteht eine axial wirkende Kraft, welche das Zahnimplantat-Analog 1 innerhalb des Verriegelungsabschnitts 20 in den Führungsnuten 17 axial in der Bohrung 5 im Dentalmodell 2 aus dem Dentalmodell 2 herausbewegt. Die axiale Bewegung endet dabei, sobald die Stifte 21 im Verriegelungsabschnitt 20 der Führungsnuten 17 im Befestigungslängsabschnitt 23 des Befestigungselements 3 an einem Anschlag gelangt sind. Dort sind sie aufgrund der Formgebung des Verriegelungsabschnitts 20 der Führungsnuten 17 sowohl in axialer Richtung als auch in Umfangs- bzw. ϕ-Richtung aufgrund der Vorspannung, welche die elastische Kunststoffkugel 4 ausübt, gegenüber dem Befestigungselement 3 fixiert.

Das Befestigungselement 3 ist aufgrund des Formschlusses im Bereich des Indexierungslängsabschnitts 9 mit der Bohrung 5 im Bereich der Unterseite 7 des Dentalmodells 2 seinerseits in Rotationsrichtung fixiert und durch die in die Fixierausnehmungen 8 eingreifenden Rasten 39 des Dentalmodells 2 in axialer Richtung fixiert.

Auf die beschriebene Weise kann mit bequemer Handhabung das erfindungsgemäße Zahnimplantat-Analog 1, dessen Grundkörper 28 rotationssymmetrisch ausgestaltet ist, exakt positioniert werden, um die Montagesituation eines Zahnersatzes auf einem Abutment in einem Implantat im Kiefer eines Patienten exakt zu simulieren. Auf diese Weise kann mit Vorteil eine Artikulierung, d.h. Anpassung der Höhe, des Zahnersatzes außerhalb des Patienten anhand des Modells bereits im Labor erfolgen, bevor der Zahnersatz endgesintert wird, um im günstigsten Fall jedwede Nachbearbeitung nach Einpassen im Patienten entfallen lassen zu können.

Erfindungsgemäß ist dabei die Montage des erfindungsgemäßen Zahnimplantat-Analogs 1 besonders bequem, da beim Einsetzen des Analogs 1 von oben in das Dentalmodell 2 keine Ausrichtung von Indexierungselementen zu berücksichtigen ist. Die Verriegelung und exakte Positionierung in Axialrichtung und in Winkelrichtung erfolgt im Zusammenwirken mit dem Befestigungselement 3 nach Art eines Bajonettverschlusses.

Um ein zum Zusammenwirken mit dem erfindungsgemäßen Befestigungselements 3 und dem erfindungsgemäßen Zahnimplantat-Analog 1 geeignetes Dentalmodell 2 herzustellen, wird mit Vorteil erfindungsgemäß eine softwareseitige Bibliothek zur Kennzeichnung der Form des Befestigungselements 3 erstellt, welche in übliche Modelbuilder Software zur Aufbereitung eines digitalen Abdrucks eingebunden werden kann. Mit Vorteil kann anhand einer eine derartige Form des erfindungsgemäßen Befestigungselements 3 kennzeichnenden Bibliothek anhand eines digitalen Abdrucks problemlos das Dentalmodell 2 zum Zusammenwirken mit dem Befestigungselement 3 und dem Zahnimplantat-Analog 1 hergestellt werden.

### BEZUGSZEICHENLISTE

- 1: Zahnimplantat-Analog
- 2: Dentalmodell
- 3: Befestigungselement
- 4: Kunstoffkugel
- 5: Bohrung
- 6: Oberseite
- 7: Unterseite
- 8: Fixierausnehmung
- 9: Indexierungslängsabschnitt
- 10: erster Aussparbereich
- 11: erste Sekante
- 12: zweiter Aussparbereich
- 13: zweite Sekante
- 14: Anschlagsfläche
- 15: Stufenfläche
- 16: Mantelfläche
- 17: Führungsnut
- 18: Axialabschnitt
- 19: Umfangsabschnitt
- 20: Verriegelungsabschnitt
- 21: Stift
- 22: Azimutwinkelbereich
- 23: Befestigungslängsabschnitt
- 24: Außendurchmesser
- 25: distaler Längsabschnitt
- 26: Außendurchmesser
- 27: proximaler Längsabschnitt
- 28: länglicher zylindrischer Körper
- 29: stufenförmiger Übergang
- 30: komplementäre Stufe
- 31: proximales Ende
- 32: Befestigungsabschnitt
- 33: Montagehilfe für Zahnimplantat-Analog
- 34: Grundkörper
- 35: Mantelfläche
- 36: distales Ende
- 37: Verbindungsschnittstelle
- 38: Montagegewinde
- 39: Rasten des Dentalmodells
- 40: Befestigungsgewinde
- 41: Montagehilfe für Befestigungselement
- 42: Montageabschnitt

## Patentansprüche

1. Zahnimplantat-Analog (1), mit einem distal angeordneten, länglichen, zylindrischen Körper (28), dessen distales Ende (36) eine Verbindungsschnittstelle (37) zu einem Abutment aufweist, und einem Befestigungsabschnitt (32) an einem proximalen Ende zum Befestigen an einem Befestigungselement (3), **dadurch gekennzeichnet, dass** der Körper (28) eine rotationssymmetrische Außenform aufweist.

2. Zahnimplantat-Analog (1) nach Anspruch 1, **dadurch gekennzeichnet, dass** der Befestigungsabschnitt (32) einen kleineren Außendurchmesser (33, 26) als ein proximaler Längsabschnitt (27) des Körpers (28) aufweist.

3. Zahnimplantat-Analog (1) nach Anspruch 1 oder 2, **dadurch gekennzeichnet, dass** der Befestigungsabschnitt (32) mindestens eine radiale Vorstehung, insbesondere Stift (21), zum Zusammenwirken, insbesondere über einen Schlitz und/oder eine Nut (17), mit dem Befestigungselement (3) aufweist.

4. Zahnimplantat-Analog (1) nach einem der Ansprüche 1 bis 3, **dadurch gekennzeichnet, dass** der Körper (28) einen distalen Längsabschnitt (25) mit einem größeren Durchmesser (24) aufweist als jener des proximalen Längsabschnitts (27).

5. Zahnimplantat-Analog (1) nach einem der vorhergehenden Ansprüche, **dadurch gekennzeichnet, dass** die Verbindungsschnittstelle (37) ausgelegt ist, um mit einer Dentalimplantat-Schraube eines Abutments zusammenzuwirken.

6. Befestigungselement (3) mit Befestigungsmitteln zum Befestigen eines Zahnimplantat-Analogs (1) in einem Dentalmodell (2), **dadurch gekennzeichnet, dass** es Indexiermittel zur Herstellung eines Rotationsschutzes gegenüber dem Dentalmodell (2) aufweist.

7. Befestigungselement (3) nach Anspruch 6, **dadurch gekennzeichnet, dass** die Indexiermittel als Indexierungslängsabschnitt (9) mit einer nicht rotationssymmetrischen Querschnittsfläche ausgestaltet sind.

8. Befestigungselement (3) nach Anspruch 6 oder 7, **dadurch gekennzeichnet, dass** die Querschnittsfläche des Indexierungslängsabschnitts (9) im Wesentlichen kreisförmig ausgestaltet ist, wobei mindestens ein Bereich (10, 12) außerhalb mindestens einer Sekante (11, 13) ausgespart ist.

9. Befestigungselement (3) nach einem der Ansprüche 6 bis 8, **dadurch gekennzeichnet, dass** mehrere Bereiche (10, 12) außerhalb jeweils einer Sekante (11, 13) ausgespart sind, wobei mindestens zwei Sekanten (11, 13) nicht parallel zueinander verlaufen.

10. Befestigungselement (3) nach einem der Ansprüche 6 bis 9, **dadurch gekennzeichnet, dass** es an einem distalen Ende eine, insbesondere ringförmige, Anschlagfläche (14) zum Anlegen an eine komplementäre Anlegefläche (15) des Dentalmodells (2) und/oder zum Anlegen des Zahn-Implantat-Analogs (1) aufweist.

11. Befestigungselement (3) nach einem der Ansprüche 6 bis 10, **dadurch gekennzeichnet, dass** die Befestigungsmittel als im Wesentlichen hohlzylindrischer Befestigungslängsabschnitt (23) ausgestaltet sind, in welchen ein Befestigungsabschnitt (32) des Zahnimplantat-Analogs (1) einführbar ist.

12. Befestigungselement (3) nach einem der Ansprüche 6 bis 11, **dadurch gekennzeichnet, dass** die Befestigungsmittel Eingriffmittel, insbesondere einen Schlitz und/oder eine Nut (17), zum Zusammenwirken mit einer radialen Vorstehung, insbesondere Stift (21), eines Befestigungsabschnitts (32) eines Zahnimplantat-Analogs (1) aufweisen.

13. Befestigungselement (3) nach einem der Ansprüche 6 bis 12, **dadurch gekennzeichnet, dass** es Fixiermittel (8) zur Herstellung einer Fixierung in axialer Richtung gegenüber dem Dentalmodell (2) aufweist.

14. Satz umfassend ein Zahnimplantat-Analog (1) und ein Befestigungselement (3) zum Befestigen des Zahnimplantat-Analogs (1) in einem Dentalmodell (2), **dadurch gekennzeichnet, dass** das Befestigungselement (3) nach einem der Ansprüche 6 bis 13 ausgestaltet ist.

15. Satz nach Anspruch 14, **dadurch gekennzeichnet, dass** das Zahnimplantat-Analog (1) nach einem der Ansprüche 1 bis 5 ausgestaltet ist.

16. Satz nach einem der Ansprüche 14 bis 15, **dadurch gekennzeichnet, dass** er ein Vorspannelement (4) umfasst, um auf das Zahnimplantat-Analog (1) und auf das Befestigungselement (3) in axialer Richtung eine diese auseinandertreibende Kraft auszuüben, wenn das Zahnimplantat-Analog (1) mittels des Befestigungselements (3) in einem Dentalmodell (2) befestigt ist.

17. Satz nach einem der Ansprüche 14 bis 16, **dadurch gekennzeichnet, dass** das Vorspannelement elastisch ausgestaltet ist, vorzugsweise als Kugel (4).

18. Verfahren zum Erstellen eines digitalen Dentalmodells (2), bei dem ein Scanadapter in ein Implantat eingesetzt wird, anschließend mittels eines Intraoralscanners ein dreidimensionaler digitaler Abdruck erhalten wird, wobei eine Position eines Implantats anhand der Position des Scanadapters eingetragen wird, **dadurch gekennzeichnet, dass** ein digitales Modell eines Befestigungselements (3) zum Befestigen eines Zahnimplantat-Analogs (1) in den digitalen Abdruck eingetragen wird, wobei das Befestigungselement (3) nach einem der Ansprüche 6 bis 13 ausgestaltet ist.
